# EUROPÄISCHE PATENTSCHRIFT

(11) **EP 1 000 681 B1**
(45) Veröffentlichungstag und Bekanntmachung des Hinweises auf die Patenterteilung: **28.01.2004**
(21) Anmeldenummer: 99121916.3
(22) Anmeldetag: 05.11.1999
(51) Int. Cl.: B21D 43/00, B21D 43/05

(54) **Transfereinrichtung mit kombiniertem Antrieb**
Transfer device with combined drive
Dispositif de transfer avec un entraînement combiné

(30) Priorität: 10.11.1998 DE 19851745
(43) Veröffentlichungstag der Anmeldung: 17.05.2000
(73) Patentinhaber: Schuler Pressen GmbH & Co. KG, 73033 Göppingen (DE)
(72) Erfinder: Hofele, Hans, Dipl.-Ing., 73035 Göppingen (DE); Dangelmayr, Andreas, Dipl.-Ing., 73113 Ottenbach (DE); Eltze, Jürgen, Dr.-Ing., 73033 Göppingen (DE); Thudium, Karl, Dipl.-Ing., 73116 Wäschenbeuren (DE)
(74) Vertreter: Rüger, Barthelt & Abel Patentanwälte

(56) Entgegenhaltungen:
- DE-A- 19 654 475

## Beschreibung

Die Erfindung betrifft eine Transfereinrichtung insbesondere für den Transfer von Werkstücken zwischen aufeinanderfolgenden Bearbeitungsstationen bspw. Pressenstufen von Großteilstufenpressen. Eine gattungsgemäße Vorrichtung ist nach dem Oberbegriff von Anspruch 1 beispielsweise aus der DE-A 19 654 475 bekannt.

Den Teiletransport von Pressenstufe zu Pressenstufe übernimmt in der Regel ein Transfersystem, das sich über die gesamte Länge der Presse erstreckt und die einzelnen Werkstücke im Gleichtakt bewegt. Ein solches Transfersystem ist bspw. aus der DE 41 43 099 A1 bekannt. Diese Transfereinrichtung weist zwei sich über die Pressenlänge erstreckende Transferschienen auf, an denen Laufwagen gelagert sind. Jeweils zwei Laufwagen tragen zwischeneinander eine Quertraverse, die mit Saugerspinnen zur Aufnahme von Werkstücken versehen ist. Zur Durchführung des Transferschritts von einer Pressenstufe zu einer anderen Pressenstufe sind die Laufwagen über ein Gestänge mit einem Kurvengetriebe verbunden, das mit den Pressenhauptantrieb in Verbindung steht. Der auf diese Weise erzielten hin- und hergehenden Bewegung der Transferschienen ist eine Hebe- und Senkbewegung überlagert. Diese wird erreicht, indem die Laufschienen insgesamt gehoben und gesenkt werden.

Eine solche Transfereinrichtung bewegt die mit einem Kurvengetriebe in Verbindung stehenden Saugertraversen synchron. Entsprechend müssen die beteiligten Werkzeuge gleichzeitig öffnen und schließen.

Aus der WO 93/00185 ist dagegen ein Transfersystem bekannt, das zwischen einzelnen Pressenstufen Transfermodule aufweist, die voneinander unabhängig ansteuerbar sind. Jeder Transfermodul weist zwei Antriebseinheiten auf, die rechts und links an einer jeweiligen Saugertraverse angreifen. Die Antriebseinheiten enthalten eine Hubeinheit, die ortsfest gelagert ist und eine Vorschubeinheit, die von der Hubeinheit gehoben und abgesenkt wird. Die Vorschubeinheit enthält einen Motor, der die Saugerbrücke über ein mit einer Doppelkurbel kombiniertes Planetengetriebe antreibt. Dabei addieren sich das Zahnspiel des Planetengetriebes zu eventuellem Lagerspiel zwischen den einzelnen miteinander verketteten Kurbeln zu einer letztendlich an der Saugerbrücke vorhandenen Positionierunsicherheit.

Aus der DE 196 54 475 ist eine gattungsgemäße Transfereinrichtung für auf einem vorgegebenen Weg zu transportierende Werkstücke, insbesondere für den Transport von Werkstücken entlang mehrerer aufeinanderfolgender Arbeitsstationen mit einer Quertraverse, die mit wenigstens einem Festhaltemittel versehen ist, das dazu dient, Werkstücke gesteuert aufzunehmen und freizugeben, mit einem Trägermittel, an dem die Quertraverse mit beiden Enden gehalten ist und mittels dessen das Festhaltemittel auf einer vorgegebenen Transferkurve geführt wird, und mit einem auf das Trägermittel wirkenden Antriebsmittel, mittels dessen die Quertraverse in zwei voneinander unabhängigen Richtungen antreibbar ist und das wenigstens eine erste und eine zweite Antriebseinheit aufweist, die voneinander unabhängig ansteuerbar sind, wobei zu dem Trägermittel ein erstes, mit einem Ende der Quertraverse verbundenes Lenkergetriebe sowie ein zweites, mit dem anderen Ende der Quertraverse verbundenes Lenkergetriebe gehört, und wobei die Quertraverse von den Lenkergetrieben getragen und über die Lenkergetriebe von den Antriebseinheiten an ihren.beiden Enden synchron angetrieben ist, bekannt.

Davon ausgehend ist es Ziel der Erfindung, eine modulare Werkstücktransfereinrichtung zu schaffen, die eine hohe Positioniergeschwindigkeit und eine gute Positioniergenauigkeit ermöglicht.

Diese Aufgabe wird mit einer Transfereinrichtung gelöst, die die Merkmale des Patentanspruchs 1 aufweist.

Die erfindungsgemäße Transfereinrichtung nutzt zur Führung und Positionierung eines Werkstückhaltemittels ein Hebelgetriebe. Dieses bestimmt die aktuelle Position und die Bewegung des Werkstückhaltemittels durch Zusammenspiel wenigstens zweier Hebel. Einer der Hebel ist dabei an seinem Ende mit dem anderen Hebel verbunden, der zusätzlich an einer von der Verbindungsstelle beabstandeten Stelle geführt ist. Durch diese doppelte Führung oder Abstützung ergibt sich eine relativ hohe Positioniergenauigkeit und der Einfluss von Lager- oder Gelenkspielen wird weitgehend zurückgedrängt.

Als vorteilhaft, sowohl für die Dynamik (Transportgeschwindigkeit) als auch für die Positioniergenauigkeit hat es sich herausgestellt, zwei vorzugsweise getrennt ansteuerbare Antriebseinheiten vorzusehen, von denen eine ortsfest gelagert und die andere in das Hebelgetriebe integriert oder unmittelbar mit diesem verbunden ist. Der ortsfeste Antrieb kann stabil und mit großer Leistung ausgelegt werden, ohne dass sein Gewicht die Dynamik der Transfereinrichtung verschlechtern würde. Durch solide Ausführung der betreffenden ortsfesten Antriebseinheit können aber Genauigkeitsvorteile erzielt werden.

Die Integration des bewegten Antriebs in das Hebelgetriebe oder der Anschluss an dasselbe erfolgt vorzugsweise an einer Stelle des Hebelgetriebes, die nur langsame Bewegungen ausführt, wobei die Umsetzung der Antriebsbewegung zu der gewünschten Transferkurve von dem Hebelgetriebe vorgenommen wird. Durch die Integration des bewegten Antriebs in das Hebelgetriebe oder den direkten Anschluss an dasselbe kann die Umsetzung der Antriebsbewegung mit geringem Spiel erreicht werden, was wiederum eine hohe und gute Positioniergenauigkeit ergibt.

Das Hebelgetriebe weist einen Schwenkarm auf, der an einem Ende mit der Trägereinrichtung, an einer davon beabstandeten Verbindungsstelle mit einer Antriebseinrichtung und an einer weiteren Stelle mit einer Führungseinrichtung verbunden ist. Der Hebel- oder Schwenkarm ist somit zweifach abgestützt, was eine präzise Führung ergibt.

Vorzugsweise dient dabei ein Verbindungspunkt der Positionierung des Schwenkarms mit Vorgabe der Hebelposition in wenigstens zwei Richtungen und einem Freiheitsgrad (Schwenkachse). Die andere Verbindungsstelle ist vorzugsweise als Führung mit zwei Freiheitsgeraden ausgebildet. Das bedeutet, dass der Hebel hier bspw. in einer Richtung verschiebbar und verschwenkbar gelagert ist.

Obwohl prinzipiell auch andere Konstellationen möglich sind, erweist es sich bei vielen Ausführungsformen als vorteilhaft, wenn die ruhende Antriebseinheit ein Linearantrieb und die mitbewegte Antriebseinheit ein Schwenkantrieb ist. Die Lineareinheit kann bspw. über eine Kugelgewindespindel mit hoher Untersetzung arbeiten und lediglich ein Heben oder Senken des Werkstückhaltemittels bewirken. Der Schwenkantrieb kann bspw. mit einem schwenkbar gelagerten Lenker verbunden sein, der wiederum mit dem Schwenkarm verbunden ist. Die Verbindung kann durch ein Gelenk gebildet sein.

Bedarfsweise kann der Schwenkantrieb auch ortsfest ruhend angeordnet sein und dem mit dem Schwenkarm verbundenen Lenker oder den Schwenkarm selbst die gewünschte Schwenkbewegung erteilen. Eine Höhenverstellung des Werkstückhaltemittels wird dann durch eine Längenverstellung des Schwenkarms durch einen mitbewegten Teleskopantrieb bewirkt.

Das Hebelgetriebe ist vorzugsweise vollständig in einer Ebene angeordnet, die parallel zu der von der Transferkurve festgelegten Ebene, d.h. in den meisten Fällen vertikal ausgerichtet ist. Dies hat den wesentlichen Vorteil, dass bei Durchführung des Transferhubs von den einzelnen Elementen des Hebelgetriebes keine seitlich ausladenden Bewegungen durchlaufen werden. In Ruhe- oder Zwischenstellung während der Arbeit der einzelnen Pressestufen können die Elemente des Hebelgetriebes sehr platzsparend zwischen den Pressenstufen in Parkstellung verbleiben. Bei Betrieb der Transfereinrichtung, d.h. bei Durchführung eines Transporthubs führt der Schwenkarm bzw. das Hebelgetriebe das Werkstückhaltemittel bspw. die Saugerbrücke ebenfalls platzsparend. Damit steht bei minimaler Pressenaufstellfläche maximaler Platz für die einzelnen Pressenstufen zur Verfügung. Letztlich wird dies erreicht, indem alle Gelenk- und Schwenkachsen des Hebelgetriebes quer zur Transportrichtung und horizontal oder zumindest rechtwinklig zu der von der Transferkurve beschriebenen Ebene gerichtet sind.

Weitere vorteilhafte Einzelheiten von Ausführungsformen der Erfindung sind Gegenstand von Unteransprüchen, ergeben sich aus der Zeichnung oder der Beschreibung.

In der Zeichnung sind Ausführungsbeispiele der Erfindung veranschaulicht. Es zeigen:
- Fig. 1: eine Pressenstrasse mit modularem Transfer und mehreren aufeinanderfolgenden Pressenstufen, in einer schematisierten ausschnittsweisen Perspektivansicht,
- Fig. 2: zwei Pressenstufen mit dazwischen angeordnetem Transfermodul, in schematisierten perspektivischer Darstellung,
- Fig. 3: die Kinematik des Transfermoduls nach Fig. 2 in Prinzipdarstellung,
- Fig. 4: eine abgewandelte Kinematik eines Transfermoduls,
- Fig. 5 bis 7: weitere Ausführungsformen von Transfermodulen, dargestellt anhand ihrer jeweiligen Kinematik.

### Figurenbeschreibung

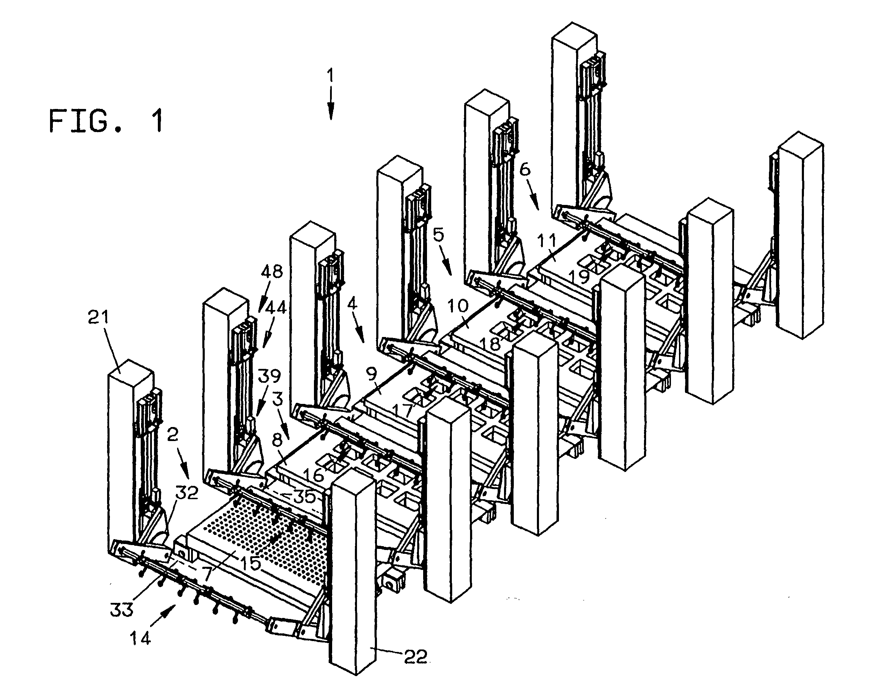

In Fig. 1 ist eine Stufenpresse 1 mit mehreren aufeinanderfolgenden Pressenstufen 2, 3, 4, 5, 6 veranschaulicht. Zu den Pressenstufen 2 bis 6 gehören Pressenschiebetische 7, 8, 9, 10, 11, auf denen nicht weiter dargestellte Werkzeuge angeordnet sind. Um den Teiletransport in die Pressenstufen 2 bis 6 und aus diesen heraus sowie die Überführung von Werkstücken von Pressenstufe zu Pressenstufe zu ermöglichen sind jeweils vor und hinter jeder Pressenstufe 2 bis 6 Transfermodule 14, 15, 16, 17, 18, 19 angeordnet. Diese sind dazu eingerichtet, Werkstücke, bspw. Karosserieteile von Kraftfahrzeugen, aufzunehmen, vorzutransportieren und abzulegen. Die Transfermodule 14 bis 19 sind dabei unabhängig voneinander ansteuerbar, so dass sie nicht zwingend im Gleichtakt arbeiten müssen. Dies eröffnet die Möglichkeit, die Hubzahl der Presse zu maximieren und die Transferbewegung für jede Pressenstufe zu optimieren. Außerdem können einzelne Pressenstufen 2 bis 6 versetzt arbeiten.

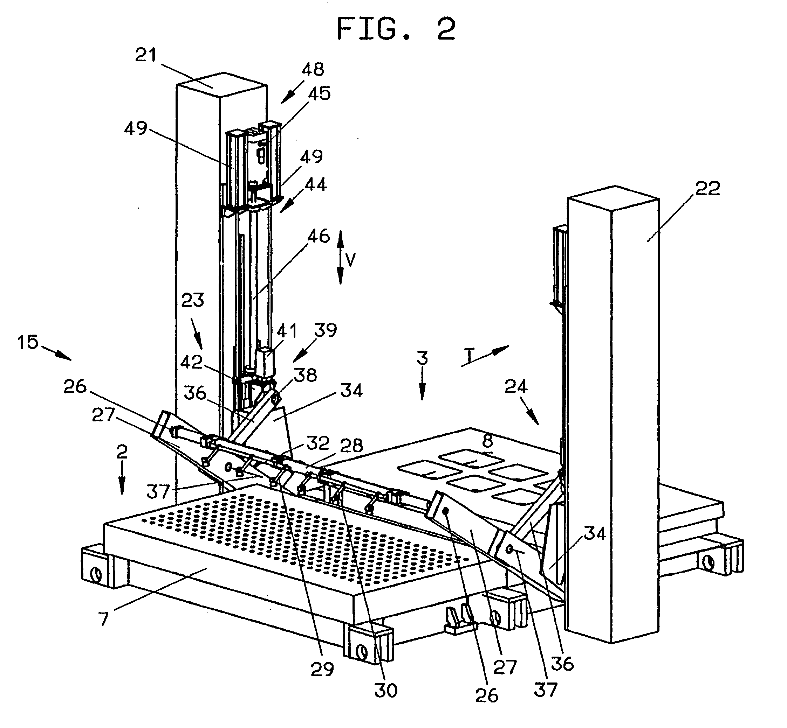

Die Transfermodule 14 bis 19 sind untereinander gleich aufgebaut. Stellvertretend für alle anderen Transfermodule 14, 16, 17, 18, 19 wird nachfolgend anhand der Fig. 2 das Transfermodul 15 detaillierter beschrieben:

Das Transfermodul 15 ist an zwei Pressenständern 21, 22 angeordnet, die zwischen den Pressenstufen 2, 3 aufgestellt sind. Bedarfsweise kann das Transfermodul jedoch auch anderweitig befestigt oder gelagert sein. Zu dem Transfermodul 15 gehören zwei Hebelgetriebe 23, 24, die den Presseständern 21 bzw. 22 zugeordnet sind.

Die Hebelgetriebe 23, 24 und deren entsprechende Antriebe sind symmetrisch zu einer längs der Transportrichtung T gedachten Vertikalebene ausgebildet. Die nachfolgende Beschreibung des Hebelgetriebes 23 gilt deshalb entsprechend für das Hebelgetriebe 24. Beide Hebelgetriebe 23, 24 weisen jeweils einen Abtrieb 26 auf, der durch eine entsprechende Aufnahme an einem Ende eines Schwenkarms 27 gebildet ist. In der Aufnahme sitzt gegebenenfalls schwenkbar jeweils ein Ende einer Saugerbrücke 28, die sich quer zu der Transportrichtung T erstreckt. Die Saugerbrücke 28 dient als Werkstückhaltemittel und wird im Wesentlichen durch ein Profilrohr gebildet, das ein oder mehrere Saugerspinnen 29, 30 trägt. Diese weisen jeweils mehrere an kurzen Armen von der Saugerbrücke 28 wegstehende Saugnäpfe auf.

Der Schwenkarm 27 des Hebelgetriebes 23 ist an seinem von der Aufnahme 26 abliegenden Ende in einer Bogenführung 32 schwenkbar gelagert, die, wie insbesondere aus Fig. 1 hervorgeht, eine quer zu der Transportrichtung T orientierte horizontale Schwenkachse 33 festlegt.

Die Bogenführung 32 ist an einem Führungsschlitten 34 gelagert, der von einer an dem Pressenständer 21, 22 gehaltenen Linearführung vertikal verschiebbar gelagert ist. Der Führungsschlitten 34 ist dabei in Vertikalrichtung V frei verschiebbar.

Zu dem Hebelgetriebe 23 gehört außer dem Schwenkarm 27 ein Lenker 36, der an einem Ende an einem eine Schwenkachse 37 festlegenden Gelenk schwenkbar an dem Schwenkarm 27 gelagert ist. Die Schwenkachse 37 ist dabei parallel zu der Schwenkachse 33 orientiert. Mit seinem von dem Schwenkarm 27 abliegenden Ende ist der Lenker 36 mit einer Abtriebswelle 38 einer Schwenkeinheit 39 verbunden. Diese gibt die Schwenkposition des Lenkers 36 vor. Zu der Schwenkeinheit 39 gehört ein Stellmotor 41, der bspw. über ein Untersetzungs- und Winkelgetriebe auf die Abtriebswelle 38 wirkt.

Die Schwenkeinheit 39 ist auf einem Linearschlitten 42 gelagert, der in Vertikalrichtung V verstellbar ist. Die Verschiebungsrichtung des Linearschlittens 42 stimmt mit der des Linearschlittens 34 überein. Der Linearschlitten 42 ist mit einem Hubantrieb 44 verbunden, zu dem ein Stellmotor 45 gehört. Dieser ist bspw. über ein Spindelhubgetriebe oder ein Riementrieb 46 mit dem Linearschlitten 42 verbunden, um dessen Höhenposition einzustellen. Das Spindelhubgetriebe oder der Riementrieb 46 wandelt die Drehbewegung des Stellmotors 45 in eine Hubbewegung.

Zum Ausgleich und zur Entlastung der Antriebseinheiten, d.h. der Schwenkeinheit 39 und der Hubeinheit 44 von dem Gewicht des Hebelgetriebes 23, der Saugerbrücke 28 und eventueller Werkstücke ist an dem Pressenständer 21 eine Gewichtsausgleichseinrichtung 48 angeordnet, zu der ein oder mehrere Pneumatikzylinder 49 gehören. Diese beaufschlagen den Linearschlitten 42 mit einer nach oben gerichteten Kraft.

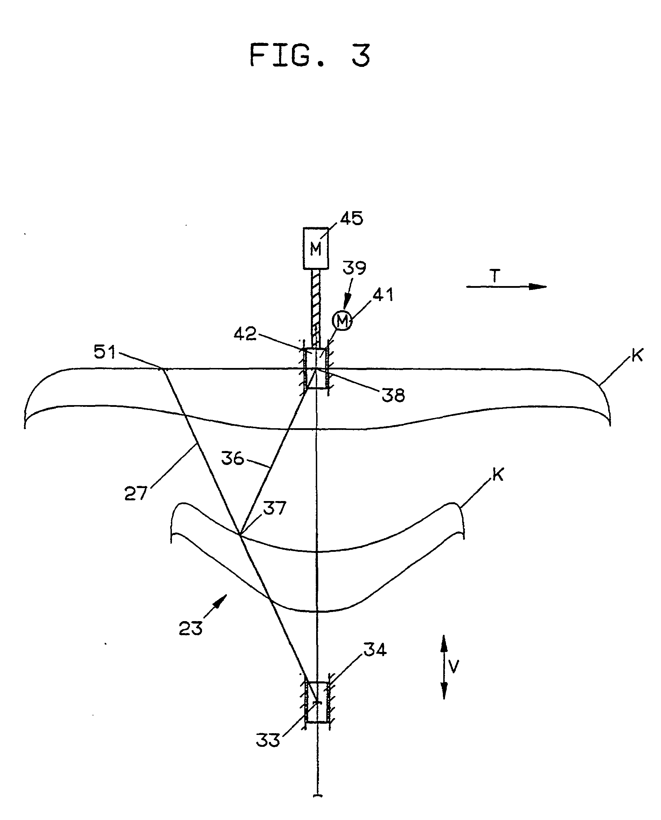

Die Kinematik des Hebelgetriebes 23 ist insbesondere aus Fig. 3 ersichtlich. Die Länge des an dem Linearschlitten 34 gelagerten Schwenkarms 27, gemessen zwischen der Schwenkachse 33 und einer Mittelachse 51 der Saugerbrücke 28, um die diese gegebenenfalls schwenkbar sein kann, ist doppelt so groß wie die Länge des Lenkers 36. Dessen Länge bestimmt sich aus dem Abstand der Gelenkachse 37 von der Drehachse der Abtriebswelle 38. Die Gelenkachse 37 ist dabei genau in der Mitte des Schwenkarms 27 angeordnet.

Die insoweit beschriebenen Transfereinheit 15 arbeitet wie folgt:

Es wird angenommen, dass die in Fig. 3 durch ihre Schwenkachse 51 angedeutete Saugerbrücke 28 und der Schwenkarm 27 in der dargestellten Position befindlich sind. Zum Durchlaufen einer Transferkurve K muss die Saugerbrücke 28 nun ohne Höhenverstellung in Transferrichtung T geführt werden. Dazu wird die Schwenkeinheit 39 so angesteuert, dass der Lenker 36 in Fig. 3 gegen den Uhrzeigersinn läuft. Ohne Ansteuerung der Hubeinheit 44 durchläuft die Saugerbrücke 28 eine gerade Bahn, wobei der Linearschlitten 34 eine Ausgleichbewegung in Vertikalrichtung V ausführt. Zum Ablegen eines Werkstücks in dem Werkzeug einer nachfolgenden Pressenstufe ist die Transferkurve K nach unten gekrümmt. Unter Abbremsung der Schwenkeinheit 39 wird diese Bahnkurve durchlaufen, indem zugleich die Hubeinheit 44 angesteuert wird, um den Linearschlitten 42 nach unten zu verfahren. Die Bewegung in Transferrichtung T wird somit allein von der Schwenkeinheit 39 und die Bewegung in Vertikalrichtung in Richtung V allein von der Hubeinheit 38 gesteuert. Entsprechend werden die übrigen Abschnitte der Transferkurve K durch geeignete Ansteuerung der Stellmotoren 41, 45 durchlaufen. Dies wird von einer nicht weiter veranschaulichten, vorzugsweisen computergesteuerten Steuereinrichtung bewerkstelligt.

Die Hubbewegung der Hubeinheit 44 wird 1:1 auf die Saugerbrücke 28 übertragen. Jedoch wird die Bewegung in Transferrichtung T ins Schnelle übersetzt. Dies erfolgt durch die unmittelbare Übertragung der Schwenkbewegung von dem Lenker 36 auf den Schwenkarm 27 ohne Zuhilfenahme von Zwischengetrieben, Zahnrädern oder dergleichen und durch den relativ großen Abstand zwischen der Gelenkachse 37 und der Schwenkachse 33 mit hoher Präzision. Um eine schnelle Transportbewegung der Saugerbrücke 28 zu erreichen, muss der Schwenkarm 36 nur relativ langsam verschwenkt werden. Damit sind sowohl die an der Schwenkeinheit 39 auftretenden Hebe- und Senkgeschwindigkeiten des Schlittens 42, als auch die von der Schwenkeinheit 39 erzeugte Stellbewegung relativ langsam. Von den vorhandenen Massen treten kaum Trägheitskräfte in Erscheinung. Die einzelnen Elemente können deshalb ohne Zugeständnisse an Leichtbaumaßnahmen stabil ausgelegt werden. Die Bewegung der Schwenkeinheit 39 mit dem Linearschlitten 42 beeinträchtigt die erzielbaren Beschleunigungs- und Bremswerte nicht.

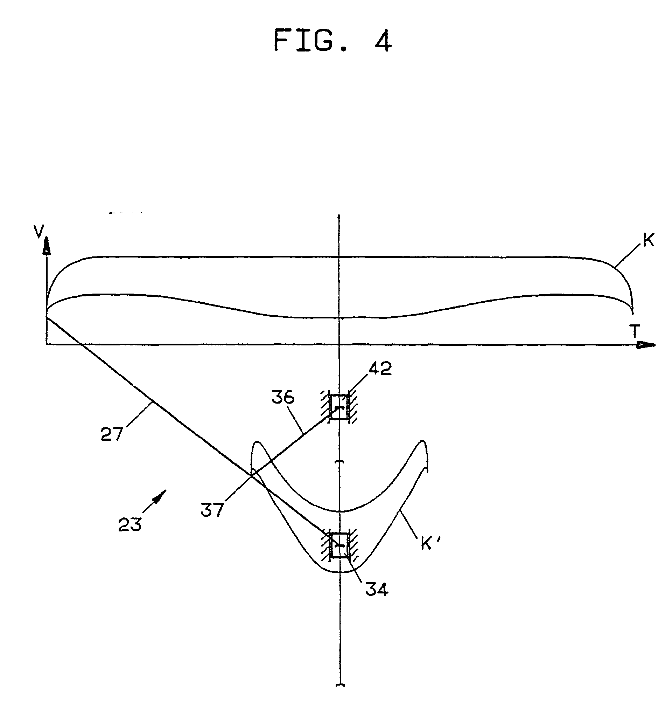

Während bei dem Transfermodul 15 mit der Kinematik nach Fig. 3 eine vollständige Entkopplung zwischen der Transferbewegung, die allein der Schwenkeinheit 39 zugeordnet ist, und der Hubbewegung, die allein der Hubeinheit 44 zugeordnet ist, erreicht wurde, ist in Fig. 4 eine Antriebseinrichtung mit abweichender Kinematik veranschaulicht. Diese unterscheidet sich zunächst im Wesentlichen durch die Längenverhältnisse des Schwenkarms 27 und des Lenkers 36, von der nach Fig. 3. Durch die unsymmetrische Teilung des Schwenkarms 27 wird, wie durch Vergleich der Transferkurve K mit der von der Schwenkachse 37 durchlaufenden Kurve K' ersichtlich ist, eine vergleichsweise stärkere Übersetzung ins Schnelle erzielt. Dies kann vorteilhaft sein. Außerdem baut der Antrieb insgesamt kompakter oder es können bei gleicher Größe von Lenker 36 und zugeordneten Antrieben längere Transferkurven K erreicht werden. Außerdem kann die Schwenkeinheit 39 an anderen Stellen des Hebelgetriebes 23 angeordnet werden. Bedarfsweise kann sie bspw. an der Verbindungsstelle zwischen dem Lenker 36 und dem Schwenkarm 37 angeordnet werden. Alternativ ist eine Anordnung an dem Linearschlitten 34 möglich.

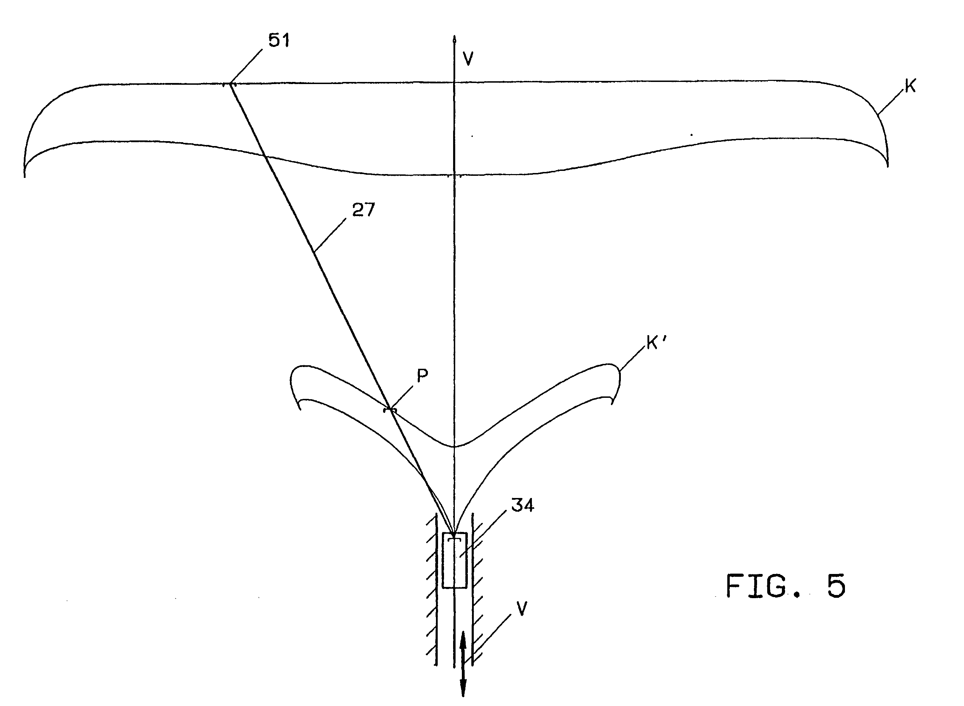

Ausgehend davon kann auf den Lenker 36 verzichtet werden, wenn der den Linearantrieb tragende Linearschlitten 34 seinerseits mit einer Linearantriebseinrichtung in Verbindung steht, die der Verstellung des Linearschlittens 34 in Vertikalrichtung V bewirkt. Der Schwenkarm 27 übernimmt wiederum die Übersetzung ins Schnelle, wie der Vergleich der von einem beliebigem Punkt P des Schwenkarms 27 durchlaufenden Kurve K' mit der Transferkurve K zeigt (Figur 5).

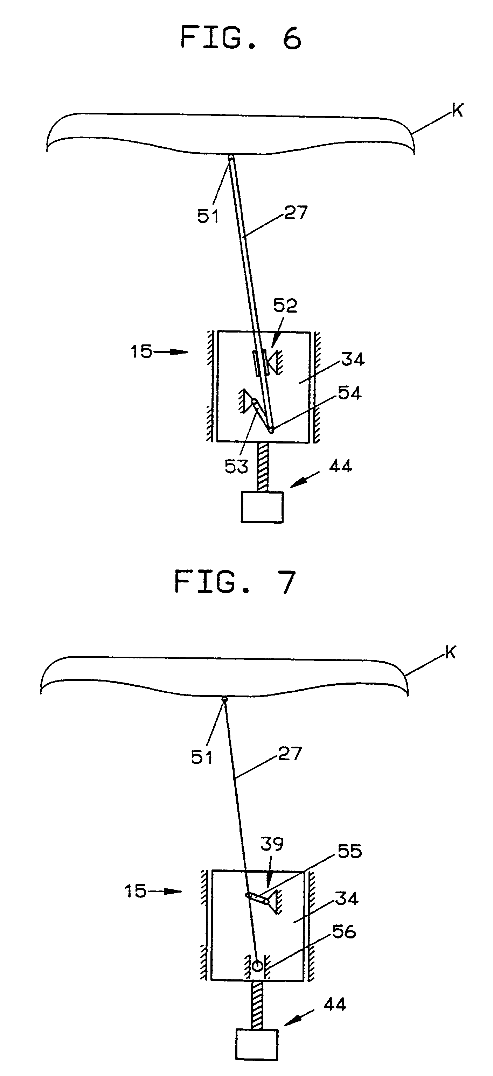

Weitere Ausführungsmöglichkeiten sind in Fig. 6 und 7 veranschaulicht. Bei der Ausführungsform nach Fig. 6 ist der Linearschlitten 34 mit der Hubeinheit 44 verbunden. Der Schlitten 34 trägt außerdem eine schwenkbar gelagerte Linearführung 52. Deren Führungsrichtung ist parallel zu der Längsrichtung des Schwenkarms 27 orientiert und sie lagert diesen. Selbst ist die Führungseinrichtung 52 um eine Schwenkachse gelagert, die rechtwinklig auf einer von der Transferkurve K beschriebenen Ebene steht.

An seinem von der Schwenkachse 51 abliegendem Ende ist der Schwenkarm 27 mit einer Antriebseinrichtung verbunden. Diese kann einen Lenker 53 aufweisen, der bei einer Gelenkachse 54 schwenkbar mit dem Ende des Schwenkarms 27 verbunden ist. Das andere Ende des Lenkers 53 ist mit einer nicht weiter veranschaulichten Drehantriebseinheit verbunden.

In Fig. 7 ist eine weiter abgewandelte Ausführungsform des Transfermoduls 15 mit ruhender Hubeinheit 44 und mit dem Schlitten 34 mit bewegter Schwenkeinheit 39 veranschaulicht. Das untere Ende des Schwenkarms 27 ist in einer Linearführung 56 vertikal verschiebbar gelagert, während der Schwenkarm 27 an einer davon beabstandeten Stelle mit einem Lenker 55 verbunden ist. Dieser verbindet den Schwenkantrieb 39 mit dem Schwenkarm 27.

Eine Transfereinrichtung, insbesondere für den Transfer von Werkstücken in Mehrstufenpressen 1, besteht aus mehreren Transfermodulen 14 bis 19, die jeweils ein von wenigstens einem Hebelgetriebe 23 getragenes Werkstückhaltemittel 28 aufweisen. Jedes Hebelgetriebe überträgt die Stellbewegung zweier voneinander unabhängiger Antriebe 39, 44 auf das Werkstückhaltemittel 28. Dabei ist einer der Antriebe 39, 44 ortsfest gelagert und der andere von dem ortsfest gelagerten Antrieb bewegt. Dies Grundprinzip eröffnet viele Gestaltungsmöglichkeiten.

## Patentansprüche

1. Transfereinrichtung für den Transport und die Positionierung von Werkstücken, insbesondere Karosserieteilen,
mit einem steuerbaren Werkstückhaltemittel (28), das dazu eingerichtet ist, das Werkstück zeitweilig an eine Trägereinrichtung (29, 30) anzukoppeln,
mit einem Hebelgetriebe (23), das einen Lenker (36) und einen Schwenkarm (27) aufweist, der das Werkstückhaltemittel (28) an einem Ende hält und auf einer wenigstens zweidimensionalen Transferkurve (K) führt, wobei der Lenker (36) und der Schwenkarm (27) an einer ersten Verbindungsstelle (37) miteinander verbunden sind, und wobei der Schwenkarm (27) an einer von der ersten Verbindungsstelle (37) beabstandeten zweiten Verbindungsstelle (33) mit einer Führungseinrichtung (34, 42) verbunden ist, die als Führung mit einem linearen Freiheitsgrad (V) und einem rotatorischen Freiheitsgrad ausgebildet ist, der eine Schwenkachse (33) festlegt,
mit wenigstens zwei Antriebseinheiten (39, 44), die über das Hebelgetriebe (23) mit dem Werkstückhaltemittel (28) verbunden sind
**dadurch gekennzeichnet,**
**dass** eine der Antriebseinheiten (44) ortsfest angeordnet und eine andere Antriebseinheit (39) als Zwischenglied in dem Hebelgetriebe (23) bewegt angeordnet ist, und
**dass** die erste Verbindungsstelle (37) von dem Werkstückhaltemittel (28) beabstandet ist.

2. Transfereinrichtung nach Anspruch 1, **dadurch gekennzeichnet, dass** die ruhende Antriebseinheit (44) ein Linearantrieb und die mitbewegte Antriebseinheit (39) ein Schwenkantrieb ist.

3. Transfereinrichtung nach Anspruch 2, **dadurch gekennzeichnet, dass** der Linearantrieb (44) auf einen Linearschlitten (42) wirkt, der den Schwenkarm (27) trägt.

4. Transfereinrichtung nach Anspruch 3, **dadurch gekennzeichnet, dass** der Linearschlitten (42) vertikal verschiebbar gelagert ist.

5. Transfereinrichtung nach Anspruch 3, **dadurch gekennzeichnet, dass** an dem Linearschlitten (42) ein Lenker (36) schwenkbar gelagert ist, der an seinem von dem Linearschlitten (42) abliegenden Ende mit dem Schwenkarm (27) verbunden ist.

6. Transfereinrichtung nach Anspruch 5, **dadurch gekennzeichnet, dass** zur Verbindung zwischen dem Schwenkarm (27) und dem Lenker (36) ein Gelenk vorgesehen ist.

7. Transfereinrichtung nach Anspruch 3, **dadurch gekennzeichnet, dass** von dem Linearschlitten (42) die nicht ortsfeste Antriebseinheit (39) getragen ist, mit deren Abtrieb (38) der Lenker (36) verbunden ist.

8. Transfereinrichtung nach Anspruch 1, **dadurch gekennzeichnet, dass** die nicht ortsfeste Antriebseinheit (39) mit dem Schwenkarm (27) verbunden ist.

9. Transfereinrichtung nach Anspruch 8, **dadurch gekennzeichnet, dass** die mit dem Schwenkarm (27) verbundene Antriebseinheit (39) eine Schwenkantriebseinheit ist.

10. Transfereinrichtung nach Anspruch 9, **dadurch gekennzeichnet, dass** die mit dem Schwenkarm (27) verbundene Antriebseinheit eine Linearantriebseinheit ist.

11. Transfereinrichtung nach Anspruch 10, **dadurch gekennzeichnet, dass** der Schwenkarm (27) teleskopierbar und die Linearantriebseinheit ein Teleskopantrieb ist.

12. Transfereinrichtung nach Anspruch 1, **dadurch gekennzeichnet, dass** die Transferkurve (K) zwei unabhängige Bewegungskomponenten (V, T) aufweist, in denen unterschiedlich lange Wege durchlaufen werden, wobei dem kurzen Weg die ruhende Antriebseinheit (44) und dem langen Weg die bewegte Antriebseinheit (39) zugeordnet ist.

13. Transfereinrichtung nach Anspruch 1, **dadurch gekennzeichnet, dass** das Hebelgetriebe (23) in einer Vertikalebene angeordnet ist.

14. Transfereinrichtung nach Anspruch 1, **dadurch gekennzeichnet, dass** alle Gelenk- und Schwenkachsen (33, 37, 38, 51) des Hebelgetriebes (23) horizontal und quer zu der Transportrichtung (T) angeordnet sind.

## Claims

1. Transfer device for the transportation and positioning of workpieces, in particular bodywork parts,
having a controllable workpiece-retaining means (28) which is set up for the purpose of coupling the workpiece temporarily to a carrier device (29, 30),
having a lever mechanism (23) which has a link (36) and a pivoting arm (27) which holds the workpiece-retaining means (28) at one end and guides it on an at least two-dimensional transfer curve (K), the link (36) and the pivoting arm (27) being connected to each other at a first connecting point (37), and the pivoting arm (27) being connected at a second connecting point (33), which is spaced apart from the first connecting point (37), to a guide device (34, 42) which is designed as a guide with a linear degree of freedom (V) and a rotatary degree of freedom which defines a pivot axis (33),
having at least two drive units (39, 44) which are connected to the workpiece-retaining means (28) via the lever mechanism (23),
**characterized**
**in that** one of the drive units (44) is arranged in a positionally fixed manner and another drive unit (39) is arranged in a moving manner as an intermediate element in the lever mechanism (23), and
**in that** the first connecting point (37) is spaced apart from the workpiece-retaining means (28).

2. Transfer device according to Claim 1, **characterized in that** the drive unit (44) which is at rest is a linear drive and the drive unit (39) which is moved at the same time is a pivoting drive.

3. Transfer device according to Claim 2, **characterized in that** the linear drive (44) acts on a linear slide (42) which carries the pivoting arm (27).

4. Transfer device according to Claim 3, **characterized in that** the linear slide (42) is mounted in a vertically displaceable manner.

5. Transfer device according to Claim 3, **characterized in that** a link (36) is mounted pivotably on the linear slide (42) and is connected at its end which is remote from the linear slide (42) to the pivoting arm (27).

6. Transfer device according to Claim 5, **characterized in that** a joint is provided for the connection between the pivoting arm (27) and the link (36).

7. Transfer device according to Claim 3, **characterized in that** the drive unit (39) which is not fixed in position is carried by the linear slide (42) and the link (36) is connected to the main drive pinion (38) of the said drive unit.

8. Transfer device according to Claim 1, **characterized in that** the drive unit (39) which is not fixed in position is connected to the pivoting arm (27 ) .

9. Transfer device according to Claim 8, **characterized in that** the drive unit (39) which is connected to the pivoting arm (27) is a pivoting drive unit.

10. Transfer device according to Claim 9, **characterized in that** the drive unit which is connected to the pivoting arm (27) is a linear drive unit.

11. Transfer device according to Claim 10, **characterized in that** the pivoting arm (27) is telescopic and the linear drive unit is a telescopic drive.

12. Transfer device according to Claim 1, **characterized in that** the transfer curve (K) has two independent movement components (V, T) in which paths of different length are traversed, with the drive unit (44) which is at rest being assigned to the short path and the drive unit (39) which is moving being assigned to the long path.

13. Transfer device according to Claim 1, **characterized in that** the lever mechanism (23) is arranged in a vertical plane.

14. Transfer device according to Claim 1, **characterized in that** all of the joint and pivot axes (33, 37, 38, 51) of the lever mechanism (23) are arranged horizontally and transversely with respect to the transporting direction (T).

## Revendications

1. Dispositif de transfert pour le transport et le positionnement de pièces à usiner, en particulier de pièces de carrosserie, comprenant
un moyen de support de pièce à usiner (28) pouvant être commandé qui est agencé pour accoupler la pièce à usiner temporairement à un dispositif porteur (29, 30),
une tringlerie (23) qui comporte une bielle (36) et un bras oscillant (27) qui porte le moyen de support de pièce à usiner (28) à une extrémité et qui le guide sur une courbe de transfert (K) au moins bidimensionnelle, la bielle (36) et le bras oscillant (27) étant reliés l'un à l'autre au droit d'une première zone de liaison (37), et le bras oscillant (27) étant relié, au droit d'une deuxième zone de liaison (33) distante de la première zone de liaison (37), à un dispositif de guidage (34, 42) qui est réalisé sous la forme d'un guide ayant un degré de liberté linéaire (V) et un degré de liberté de rotation qui détermine un axe d'oscillation (33),
au moins deux unités d'entraînement (39, 44) qui sont reliées par l'intermédiaire de la tringlerie (23) au moyen du support de pièce à usiner (28),
**caractérisé**
**en ce qu'**une des unités d'entraînement (44) est disposée fixe en position et une autre unité d'entraînement (39) est disposée mobile en qualité d'élément intermédiaire dans la tringlerie (23), et
**en ce que** la première zone de liaison (37) est éloignée du moyen de support de pièce à usiner (28).

2. Dispositif de transfert selon la revendication 1, **caractérisé en ce que** l'unité d'entraînement fixe (44) est un entraînement linéaire et l'unité d'entraînement (39) qui accompagne le mouvement est un entraînement d'oscillation.

3. Dispositif de transfert selon la revendication 2, **caractérisé en ce que** l'entraînement linéaire (44) agit sur un chariot linéaire (42) qui porte le bras oscillant (27).

4. Dispositif de transfert selon la revendication 3, **caractérisé en ce que** le chariot linéaire (42) est monté pour coulisser verticalement.

5. Dispositif de transfert selon la revendication 3, **caractérisé en ce qu'**une bielle (36), qui est reliée au bras oscillant (27) à son extrémité éloignée du chariot linéaire (42), est montée oscillante sur le chariot linéaire (42).

6. Dispositif de transfert selon la revendication 5, **caractérisé en ce qu'**il est prévu une articulation pour la liaison entre le bras oscillant (27) et la bielle (36).

7. Dispositif de transfert selon la revendication 3, **caractérisé en ce que** l'unité d'entraînement (39), qui n'est pas fixe en position et à l'organe de sortie (38) de laquelle la bielle (36) est reliée, est portée par le chariot linéaire (42).

8. Dispositif de transfert selon la revendication 1, **caractérisé en ce que** l'unité d'entraînement (39), qui n'est pas fixe en position, est reliée au bras oscillant (27).

9. Dispositif de transfert selon la revendication 8, **caractérisé en ce que** l'unité d'entraînement (39), qui est reliée au bras oscillant (27), est une unité d'entraînement en oscillation.

10. Dispositif de transfert selon la revendication 9, **caractérisé en ce que** l'unité d'entraînement reliée au bras oscillant (27) est une unité d'entraînement linéaire.

11. Dispositif de transfert selon la revendication 10, **caractérisé en ce que** le bras oscillant (27) est télescopique et l'unité d'entraînement linéaire est un entraînement télescopique.

12. Dispositif de transfert selon la revendication 1, **caractérisé en ce que** la courbe de transfert (K) comprend deux composantes de mouvement indépendantes (V, T) dans lesquelles des courses de différentes longueurs sont parcourues, l'unité d'entraînement fixe (44) étant associée à la course courte et l'unité d'entraînement mobile (39) étant associée à la course longue.

13. Dispositif de transfert selon la revendication 1, **caractérisé en ce que** la tringlerie (23) est disposée dans un plan vertical.

14. Dispositif de transfert selon la revendication 1, **caractérisé en ce que** tous les axes d'articulation et d'oscillation (33, 37, 38, 51) de la tringlerie (23) sont disposés horizontalement et transversalement à la direction de transport (T).
